# EUROPÄISCHE PATENTSCHRIFT

(11) **EP 3 222 472 B1**
(45) Veröffentlichungstag und Bekanntmachung des Hinweises auf die Patenterteilung: **02.10.2019**
(21) Anmeldenummer: 16162022.4
(22) Anmeldetag: 23.03.2016
(51) Int. Cl.: B60R 19/02, B60R 19/56, B66F 9/075

(54) **RAMMSCHUTZ FÜR EINEN LASTFAHRZEUGHECKBEREICH**
RAM PROTECTION FOR A LOAD VEHICLE REAR AREA
PROTECTION CONTRE LES CHOCS POUR L'ARRIERE DE CAMION

(43) Veröffentlichungstag der Anmeldung: 27.09.2017
(73) Patentinhaber: Fliegl, Helmut, 07819 Triptis (DE)
(72) Erfinder: Fliegl, Helmut, 07819 Triptis (DE)
(74) Vertreter: Kramer Barske Schmidtchen Patentanwälte PartG mbB

(56) Entgegenhaltungen:
- EP-A1- 2 428 397
- EP-A1- 2 431 235
- WO-A2-2008/147218
- US-A- 5 560 662

## Beschreibung

### Technisches Gebiet

Die vorliegende Offenbarung betrifft einen Rammschutz für einen Lastfahrzeugheckbereich. Im Rahmen dieser Offenbarung ist unter dem Begriff "Lastfahrzeug" sowohl ein selbst angetriebenes als auch ein fremdangetriebenes Lastfahrzeug bzw. Nutzfahrzeug zum Transport von Ladegütern zu verstehen, das ein zulässiges Gesamtgewicht von 3,5 t insbesondere 7,5 t nicht unterschreitet.

### Hintergrund

Fahrzeuge weisen häufig einen heckseitigen Rammschutz auf. Dies ist insbesondere dann der Fall, wenn die Fahrzeuge über eine heckseitige Be- und Entlademöglichkeit verfügen. Der Rammschutz dient unter anderem zur Dämpfung von Stoßkräften, die bei einem heckseitigen Anschlagen des Fahrzeugs an eine Laderampe oder dergleichen auftreten.

Eine einfache Ausführungsform eines derartigen Rammschutzes ist aus der DE100 22 375 A1 bekannt. Der Rammschutz besteht aus einem quaderförmigen Rammpuffer, der aus einem elastischen Material wie Gummi, Kautschuk oder Elastomer hergestellt ist. Beim Anschlagen des Fahrzeugs an der Laderampe wird der Rammpuffer zusammengedrückt, sodass die auf das Fahrzeugheck wirkenden Stoßkräfte zumindest teilweise in elastische Verformungsenergie umgewandelt werden. Allerdings sind derartige Rammpuffer einem nicht unerheblichen Materialverschleiß unterworfen, da beispielsweise bei einem Be- und Entladevorgang Vertikalbewegungen des Fahrzeugs erfolgen, die auf den Rammpuffer in Form von Reibung einwirken.

Auch die US 5,560,662 A zeigt einen Rammschutz mit länglichem Profilkörper, an dem einzelne Anprallkörper anbringbar sind.

Ein verschleißärmerer Rammschutz ist aus der EP 2 267 331 A1 bekannt. Der Rammschutz besteht aus einer vertikalen Stahlplatte, die als Anschlagfläche für die Laderampe dient und die zwischen der Laderampe und dem Fahrzeugheck auftretenden Stoßkräfte über mehrere Elastomerkörper abdämpft.

Eine weitere Ausführungsform eines Rammschutzes ist aus der DE 20 2011 050 555 U1 bekannt. Bei dieser Ausführungsform ist der Rammschutz als Rollrammpuffer ausgeführt. Der Rollrammpuffer weist eine im Wesentlichen zylindrische Form auf und ist am Fahrzeugheck in einem separaten Gehäuse drehbar gelagert. Beim Anschlagen des Fahrzeughecks an die Laderampe und der anschließenden Auf- und Abbewegung des Fahrzeugs kann der Rollrammpuffer an der Laderampe abrollen, wodurch der Materialverschleiß des Rammpuffers reduziert und die Lebensdauer des Rammpuffers erhöht wird.

Aus EP 2 431 235 A1 ist ein Rammschutz bekannt, der eine übliche Lagerung für zwei Rollrammpufferelemente aufweist. Die Rollrammpufferelemente sind mittels eines Stifts in einer Halterung gelagert, die wiederum an ein Endprofil eines Nutzfahrzeugheckbereichs angeschraubt wird.

Die EP 2 428 397 A1 zeigt lediglich eine Lochprofilschiene für ein Nutzfahrzeug, die seitlich an einer Ladefläche des Nutzfahrzeugs anordenbar ist. Die Profilschiene selbst weist Öffnungen zur Aufnahme von Zuggurten zur Sicherung von auf der Ladefläche zu sichernden Transportgut auf. Die Wandstärke der Öffnungsränder ist verstärkt gegenüber der Wandstärke der Profilschiene zwischen den Öffnungsrändern benachbarter Öffnungen.

Die WO 2008/147218 A2 betrifft leinen an dem Heckbereich eines Nutzfahrzeugs anbringbaren Hublift. Hierzu sind auf der Unterseite des Nutzfahrzeugaufbaus Einschuböffnungen für die Ladegabel des Hublifts vorgesehen, um diesen im Heckbereich mit dem Nutzfahrzeug mobil zu transportieren.

Ausgehend von diesem Stand der Technik besteht das zugrunde liegende Problem darin, einen verbesserten Rammschutz bereitzustellen.

### Zusammenfassung der Offenbarung

Ein Aspekt der vorliegenden Offenbarung betrifft einen Rammschutz für einen Nutzfahrzeug- bzw. Lastfahrzeugheckbereich. Der Rammschutz weist einen länglichen Profilkörper auf, der eine Befestigungsseite zum Befestigen des Rammschutzes an dem Lastfahrzeugheckbereich und eine der Befestigungsseite gegenüberliegende Anschlagseite aufweist. Die Anschlagseite weist eine Knautschzone zum Aufnehmen von Stoßkräften, die beispielsweise beim Anschlagen des Fahrzeughecks an einer Laderampe oder dergleichen auftreten, auf. Die Knautschzone weist ferner einen zum Lastfahrzeugheckbereich hin offenen Hohlraum auf, der zumindest teilweise durch eine Oberseite und eine Unterseite des Profilkörpers begrenzt ist. Der Hohlraum ist dazu ausgebildet, durch eine Verformung der Oberseite und/oder der Unterseite Stoßkräfte beim Anschlagen des Rammschutzes aufzunehmen, Der Rammschutz weist ferner mindestens einen als Ausnehmung in den Profilkörper integrierten Aufnahmebereich auf. Der mindestens eine Aufnahmebereich ist dazu ausgebildet, einen Rollrammpuffer zu befestigen und eine Befestigungsmöglichkeit für einen an dem Lastfahrzeugheckbereich mitgeführten Ladungsträger zu schaffen. Der Rammschutz weist benachbart zur Ausnehmung zwei in dem Hohlraum angeordnete Lagerelemente auf, die mit der Oberseite und der Unterseite verbunden sind. Die Lagerelemente weisen jeweils eine Bohrung zum Lagern eines Sicherungsbolzens und/oder eines Haltebolzens für den Rollrammpuffer auf.

Mit dem im Rammschutz integrierten Aufnahmebereich wird erreicht, dass der Rammschutz eine Befestigungsmöglichkeit zum wahlweisen Befestigen eines Rollrammpuffers oder eines mitgeführten Ladungsträgers wie beispielsweise einen Mitnahme-Gabelstapler schafft. Der Rammschutz gemäß der vorliegenden Offenbarung vereint somit eine Knautschzone zum Einleiten von Stoßkräften mit der Möglichkeit einer zusätzlichen Knautschzone in Form eines elastisch verformbaren Rollrammpuffers und/oder der Möglichkeit Ladungsträger oder dergleichen am Rammschutz zu befestigen. Der Rammschutz gemäß der vorliegenden Offenbarung ist somit variabler einsetzbar und gleichzeitig kostengünstig und einfach herstellbar. Ferner ermöglicht der Rammschutz auch ohne den optionalen Rollrammpuffer, dass im Wesentlichen die gesamte Breite des Fahrzeugheckbereichs durch den Rammschutz geschützt ist.

Die Verformung kann beispielsweise eine elastische oder eine plastische Verformung sein. Durch diese Ausgestaltung weist der Rammschutz eine Pufferwirkung auf, die ermöglicht, Stoßkräfte zumindest teilweise in elastische und/oder plastische Verformungsenergie umzuwandeln.

Durch die erläuterte Ausgestaltung ist in den Profilkörper ein Lager zum Lagern des Sicherungsbolzens und/oder des Rollrammpuffers integriert. Dadurch entsteht ein besonders kompakter Rammschutz, wodurch die bislang aus dem Stand der Technik bekannten separaten Gehäuse für die Rollrammpuffer nicht länger benötigt werden.

In einer weiteren beispielhaften Ausführungsform weist jedes der Lagerelemente an einer oberen Seite und/oder einer unteren Seite eine Nase auf. Die Nase ist zum Eingreifen in eine entsprechend geformte Aussparung in der Oberseite und/oder der Unterseite des Profilkörpers ausgebildet. Durch diese beispielhafte Ausführungsform wird ein Formschluss zwischen den Lagerelementen und dem Profilkörper erzielt, wodurch die Lagerelemente stabiler mit dem Profilkörper verbunden werden können.

In einer weiteren beispielhaften Ausführungsform sind eine Oberseite und eine Unterseite des Profilkörpers zueinander V-förmig angeordnet und an der Anschlagseite des Rammschutzes über eine gemeinsame Kante miteinander verbunden. Die Kante weist eine Rundung auf, die als Anschlagfläche für den Rammschutz ausgebildet ist. Bei dieser beispielhaften Ausführungsform wird erreicht, dass die auf den Rammschutz einwirkenden Stoßkräfte über eine abgerundete Kante in den Rammschutz eingeleitet und von dort auf die Oberseite und die Unterseite des Rammschutzes übergeleitet werden können. Durch die Rundung werden die Stoßkräfte gleichmäßig auf die Ober- und Unterseite übertragen. Zudem erhöht das V-förmige Querschnittsprofil eine Torsionssteifigkeit des Rammschutzes und optimiert somit die Kraftein- und überleitung.

In einer weiteren beispielhaften Ausführungsform umfasst der Sicherungsbolzen, der im Übrigen auch als Lagerbolzen für den Rollrammpuffer dienen kann, einen geraden Abschnitt, der in der Bohrung der Lagerelemente verschieblich gelagert ist, und ein an den geraden Abschnitt anschließendes bogenförmiges Griffende. Ferner ist an der Unterseite des Profilkörpers ein Langloch vorhanden, durch das das bogenförmige Griffende zumindest teilweise hindurchtritt bzw. hindurchragt. In dieser beispielhaften Ausführungsform kann der Sicherungsbolzen einfach und bequem zwischen einer geschlossenen Stellung und einer offenen Stellung bewegt werden, wodurch ein Anschließen der Sicherungskette oder ein Wechseln des Rollrammpuffers erleichtert wird.

In einer weiteren beispielhaften Ausführungsform weist das Langloch einen in das Langloch hineinragenden Vorsprung auf. Der Vorsprung dient als Anschlag für das bogenförmige Griffende in der geschlossenen Stellung des Sicherungsbolzens. In dieser beispielhaften Ausführungsform wird verhindert, dass sich der Sicherungsbolzen aus der geschlossenen Stellung ungewollt lösen kann, da das Griffende aufgrund seiner Gewichtskraft am Anschlag anliegt und eine Lösen des Sicherungsbolzens nur durch ein Drehen des Griffendes und gleichzeitiges Verschieben des Sicherbolzens erfolgen kann.

In einer weiteren beispielhaften Ausführungsform ist der Profilkörper des Rammschutzes als ein einteilig umgeformtes Blechteil ausgebildet. Diese beispielhafte Ausführungsform stellt eine besonders günstige und gleichzeitig stabile Ausgestaltung des Rammschutzes dar und spart zudem Herstellungskosten.

### Kurze Beschreibung der Zeichnungen

Weitere Merkmale und Aspekte der vorliegenden Offenbarung werden durch die folgenden Beschreibung und die beiliegenden Zeichnungen offensichtlich, in denen:
Fig. 1 eine Heckansicht eines Fahrzeugshecks mit einem Rammschutz gemäß der vorliegenden Offenbarung ist;
Fig. 2 eine perspektivische Ansicht eines Rammschutzes gemäß der vorliegenden Offenbarung ist;
Fig. 3 eine Schnittansicht des Rammschutzes aus Fig. 1 ist;
Fig. 4 eine Seitenansicht einer beispielhaften Ausführungsform eines Lagerelementes für einen Rammschutz gemäß der vorliegenden Offenbarung ist;
Fig. 5 eine Abwicklung eines Rammschutzes gemäß der vorliegenden Offenbarung ist;
Fig. 6 eine Teilansicht eines Rammschutzes gemäß der vorliegenden Offenbarung ist, die einen integrierten Rollrammpuffer in einem eingebauten und gesicherten Zustand zeigt;
Fig. 7 eine weitere Teilansicht eines Rammschutzes gemäß der vorliegenden Offenbarung ist, die den Rollrammpuffer aus Fig. 6 in einem eingebauten und ungesicherten Zustand zeigt;
Fig. 8 eine weitere Teilansicht eines Rammschutzes gemäß der vorliegenden Offenbarung ist, die den Rollrammpuffer aus Fig. 6 in einem demontierten Zustand zeigt;
Fig. 9 eine weitere Teilansicht eines Rammschutzes gemäß der vorliegenden Offenbarung ist, die einen Sicherungsbolzen zeigt; und
Fig. 10 eine weitere Teilansicht eines Rammschutzes gemäß der vorliegenden Offenbarung ist, die den Sicherungsbolzen aus Fig. 9 zusammen mit einer Sicherungskette zeigt.

### Detaillierte Beschreibung

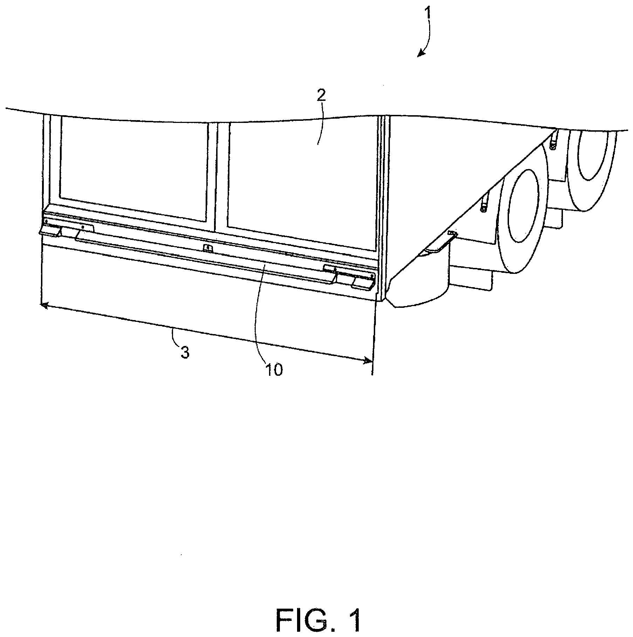

In Fig. 1 ist in Form eines Lastfahrzeuganhängers 1 ein Beispiel eines Nutzfahrzeugs bzw. Lastfahrzeugs gezeigt. Wie erwähnt ist im Rahmen dieser Offenbarung unter dem Begriff "Lastfahrzeug" sowohl ein selbst angetriebenes als auch ein fremdangetriebenes Nutzfahrzeug bzw. Lastfahrzeug wie beispielsweise ein Lastfahrzeuganhänger zu verstehen. Das Lastfahrzeug kann ein wie hier dargestellter Sattelauflieger für ein Sattelkraftfahrzeug oder jede andere Art von Lastfahrzeuganhänger sein, beispielsweise ein Deichselanhänger oder dergleichen. Das Lastfahrzeug kann aber auch eine Zugmaschine wie beispielsweise eine Sattelzugmaschine oder eine andere Zugmaschine sein.

Der in der Fig. 1 gezeigte Lastfahrzeuganhänger 1 weist einen Lastfahrzeugheckbereich 2 mit einer Breite 3 auf. Die Breite 3 kann in einem Bereich von ungefähr 1 m bei Tandemplatformanhängem bis zu 2,5 m bei Sattelaufliegern oder sogar bis zu 3 m oder mehr bei großen Sattelaufliegern sein. Der Lastfahrzeugheckbereich 2 kann ferner einen Be- und Entladebereich zum Be- und Entladen eines Ladegutes aufweisen. Am Lastfahrzeugheckbereich 2 kann ferner ein mitgeführter Ladungsträger (nicht gezeigt) wie beispielsweise ein austauschbarer Mitnahme-Gabelstapler anbringbar sein.

Wie in der Fig. 1 gezeigt, ist an dem Lastfahrzeugheckbereich 2 ferner ein Rammschutz 10 angebracht, der zum Aufnehmen von Stoßkräften, die auf den Lastfahrzeugheckbereich 2 wirken, ausgebildet ist und die aufgenommenen Stoßkräfte über den Rammschutz 10 zumindest teilweise in einen Rahmenbereich des Lastfahrzeugheckbereichs 2 einleitet.

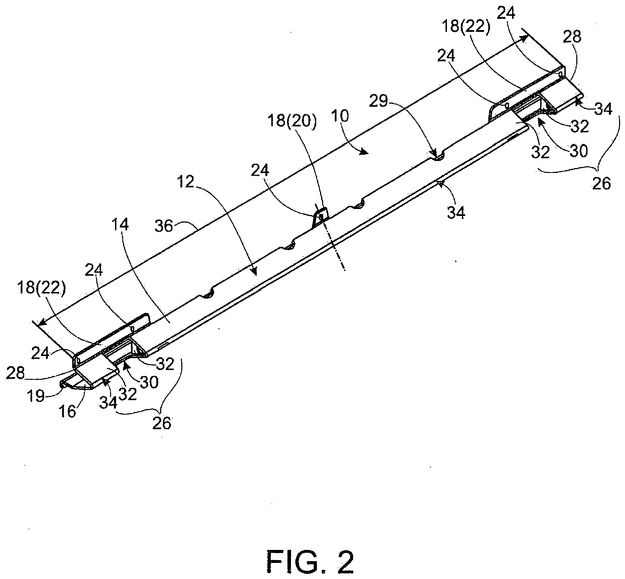

Fig. 2 zeigt eine perspektivische Ansicht eines Rammschutzes 10 gemäß der vorliegenden Offenbarung. Der Rammschutz 10 weist einen länglichen Profilkörper 12 auf. Der Profilkörper 12 weist eine zum Lastfahrzeugheckbereich 2 weisende Befestigungsseite und eine gegenüberliegende Anschlagseite auf. Der Profilkörper 12 weist ferner eine Oberseite 14 und eine Unterseite 16 auf. An der Oberseite 14 ist ein oberer Befestigungsbereich 18 ausgebildet, der zum Befestigen des Rammschutzes 10 an einem oberen Abschnitt des Lastfahrzeugheckbereichs 2 ausgebildet ist. An der Unterseite 16 ist ein unterer Befestigungsbereich 19 ausgebildet, der zum Befestigen des Rammschutzes 10 an einem unteren Abschnitt des Lastfahrzeugheckbereichs 2 ausgebildet ist.

Wie in Fig. 2 gezeigt, umfasst der obere Befestigungsbereich 18 eine mittige Befestigungslasche bzw. einem mittigen Flansch 20 und zwei seitliche Befestigungslaschen bzw. zwei seitliche Flansche 22. Die drei Befestigungslaschen 20, 22 weisen jeweils eine oder mehrere Bohrungen 24 auf, durch die Haftmittel, beispielsweise Schrauben, zum Befestigen des Rammschutzes 10 am Lastfahrzeugheckbereich 2 geführt werden können. In anderen Ausführungsformen können selbstverständlich mehr oder weniger als drei Befestigungslaschen vorhanden sein. Natürlich ist auch eine andere Befestigungsmöglichkeit als die erwähnte Verschraubung denkbar.

Der Profilkörper 12 weist ferner seitliche Endbereiche 26 auf. Die seitlichen Endbereich 26 erstrecken sich von seitlichen Enden 28 des Profilkörpers 12 in Richtung hin zur mittigen Befestigungslasche 24. Wie in Fig. 2 gezeigt, sind die seitlichen Befestigungslaschen 22 in den Endbereichen 26 angeordnet und erstrecken sich ebenfalls von den seitlichen Enden 28 in Richtung hin zur mittigen Befestigungslasche 24. Obwohl die seitlichen Befestigungslaschen 22 mit dem seitlichen Enden 28 bündig abschließen, können die seitlichen Befestigungslaschen 22 selbstverständlich auch nach innen versetzt angeordnet sein. Auch können die seitlichen Befestigungslaschen 22 außerhalb der seitlichen Endbereiche 26 angeordnet sein.

Wie ebenfalls in Fig. 2 gezeigt, weist die Oberseite 14 mehrere bogenförmige Aussparungen 29 auf. Die Aussparungen 29 sind auf der Seite der Befestigungsseite angeordnet und erstrecken sich von dort in Richtung zur Anschlagseite.

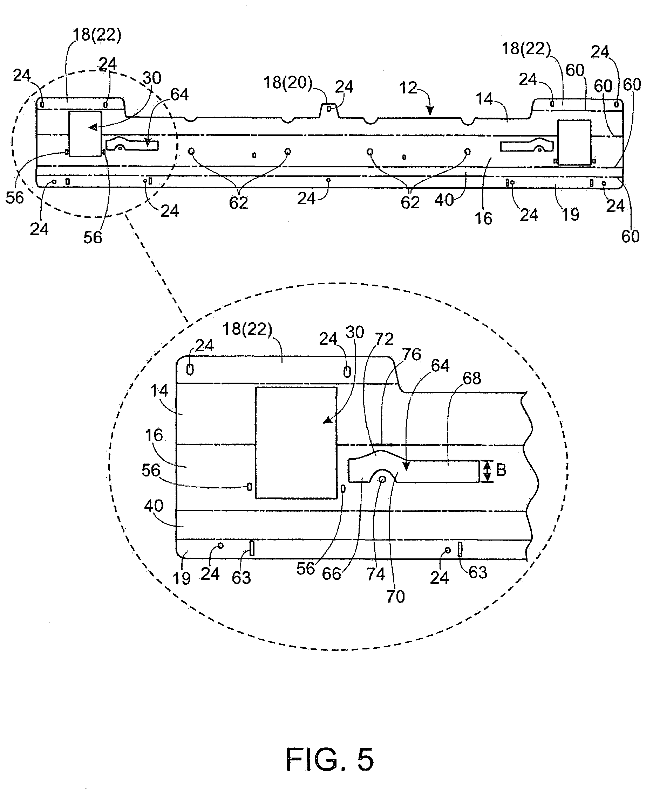

Die Aussparungen 29 sind Teil einer Durchführung für eine Zollschnur, wie in Zusammenhang mit Fig. 5 näher beschrieben wird. Darüber hinaus dienen die Aussparungen 29 auch der Gewichtsreduzierung des Rammschutzes 10 bei gleichbleibender Steifigkeit bzw. Stabilität des Rammschutzes 10. Anstelle der bogenförmigen Aussparungen 29 können natürlich auch anders geformte Aussparungen verwendet werden, sofern die Stabilität des Rammschutzes 10 gewahrt bleibt und eine Durchführung der Zollschnur möglich ist.

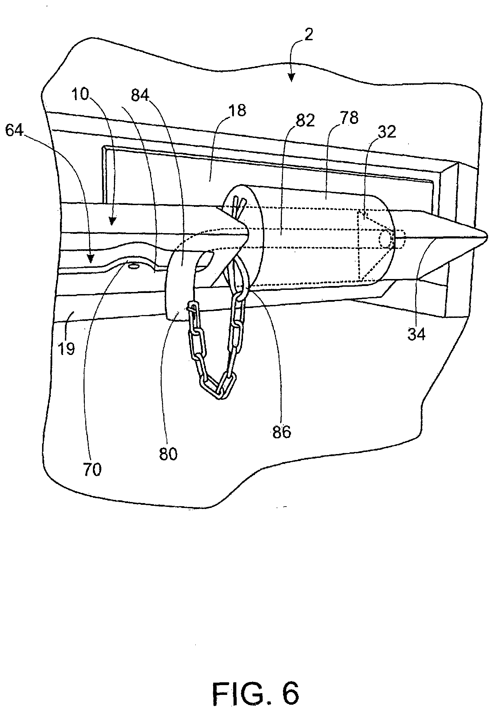

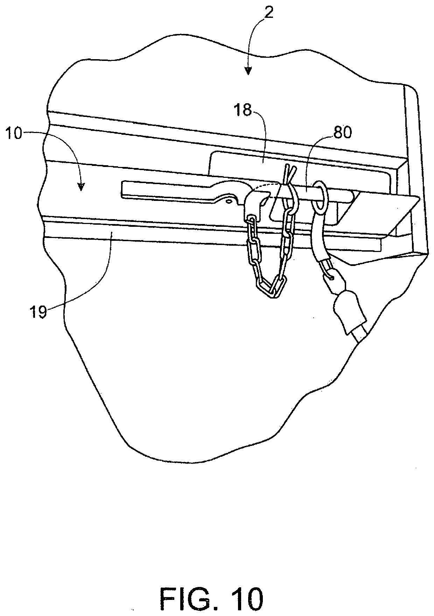

Der Profilkörper 12 weist ferner zwei Aufnahmebereiche 30 zum Aufnehmen eines Rollrammpuffers und/oder eines Sicherungsbolzens auf, wie in Zusammenhang mit den Fig. 6 bis 9 näher beschrieben wird. Die Aufnahmebereiche 30 sind an den seitlichen Endbereichen 26 angeordnet und als Ausnehmungen in der Oberseite 14 und der Unterseite 16 ausgebildet. Wie in Fig. 2 gezeigt, sind die Aufnahmebereiche 30 von den seitlichen Enden 28 beabstandet. Es ist jedoch auch möglich, dass die Aufnahmebereiche 30 bis nahezu an die seitlichen Enden 28 heranreichen. Die Aufnahmebereiche 30 sind dazu ausgebildet, einen Rollrammpuffer wie er in Fig. 6 bis 8 gezeigt ist, zu befestigen. Der Aufnahmebereich 30 bietet zudem die Möglichkeit am Fahrzeugheckbereich 2 mitgeführte Ladungsträger wie beispielsweise einen Mitnahme-Gabelstapler über eine Sicherungskette (siehe Fig. 10) oder einen Verzurrgurt zu befestigen.

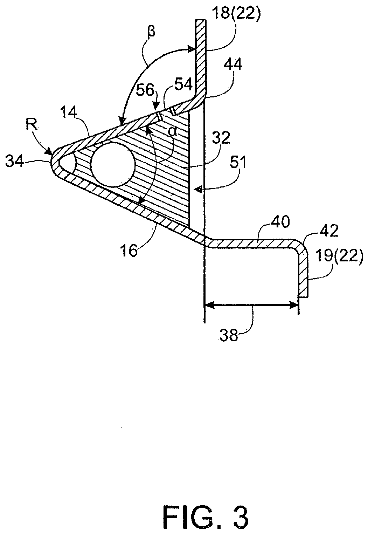

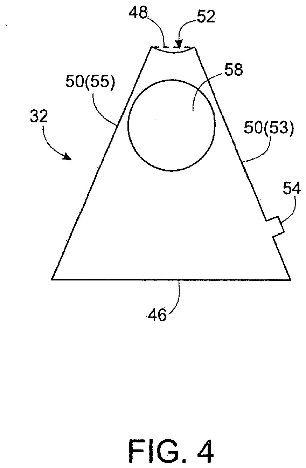

Seitlich der Aufnahmebereiche 30 sind Lagerelemente 32 eingesetzt. Die Lagerelemente 32 sind dazu ausgebildet, einen Sicherungsbolzen oder einen Haltebolzen für den Rollrammpuffer lösbar zu befestigen und längsverschieblich zu lagern. Die Lagerelemente 32 werden näher in Zusammenhang mit den Fig. 3 und 4 beschrieben.

Wie beispielhaft .in Fig. 2 gezeigt, sind die Oberseite 14 und die Unterseite 16 in einer V-Form zueinander angeordnet. Die Oberseite 14 und die Unterseite 16 sind ferner an einer gemeinsamen Kante 34 miteinander verbunden. Die Kante 34 dient zum Aufnehmen von Stoßkräften, wenn der Rammschutz 10 an eine Laderampe oder dergleichen anschlägt. Von der Kante 34 werden die Stoßkräfte auf die Oberseite 14 und die Unterseite 16 übertragen und von dort in einen Rahmenbereich des Lastfahrzeugheckbereichs 2 eingeleitet. Eine nähere Beschreibung der Kante 34 erfolgt in Zusammenhang mit der Fig. 3.

Um eine möglichst große Krafteinleitung in den Rammschutz 10 zu erzielen, ist eine Länge 36 des Profilkörpers 12 derart bemessen, dass die Länge 36 des Profilkörpers 12 ungefähr der Breite 3 des Lastfahrzeugheckbereichs 2 entspricht. Mit anderen Worten ist ein Abstand 36 zwischen den seitlichen Enden 28 des Profilkörpers 12 derart bemessen, dass sich der Rammschutz 10 nahezu über die gesamte Breite 3 des Lastfahrzeugheckbereichs 2 erstreckt. Indem der Rammschutz 10 den Lastfahrzeugheckbereich 2 nahezu über die gesamte Breite 3 überdeckt, können Stoßkräfte, die auf die Kante 34 einwirken, effektiv auf den Lastfahrzeugheckbereich 2 und insbesondere auf dessen Rahmenbereich übertragen werden. Damit wird eine Dämpfung der Stoßkräfte auch ohne die optionalen Rollrammpuffer optimiert und die Kraftein- bzw. überleitung in den Rahmenbereich verbessert.

Fig. 3 zeigt eine Schnittansicht des Rammschutzes aus Fig. 1. Wie in Fig. 3 gezeigt, bilden die Oberseite 14 und die Unterseite 16 ein im Wesentlichen V-förmiges Querschnittsprofil.

Die Oberseite 14 und die Unterseite 16 schließen gemeinsam einen Winkel α ein. Der Winkel α kann in einem Bereich zwischen 10° und 170°, vorzugsweise zwischen 30° und 70°, und weiter vorzugsweise zwischen 40° und 50° liegen. Wie ferner in Fig. 3 gezeigt, erstreckt sich der obere Befestigungsbereich 18 im Wesentlichen vertikal, das heißt im Wesentlichen parallel zum Lastfahrzeugheckbereich 2. Aufgrund des V-förmigen Querschnittsprofils schließt der obere Befestigungsbereich 18 mit der Oberseite 14 einen Winkel β ein, dessen Größe in Abhängigkeit des Winkels α derart bemessen ist, dass der obere Befestigungsbereich 18 im Wesentlichen vertikal angeordnet ist. Der untere Befestigungsbereich 19 erstreckt sich ebenfalls im Wesentlichen vertikal, das heißt im Wesentlichen parallel zum Lastfahrzeugheckbereich 2.

Wie zudem in Fig. 3 gezeigt, ist der untere Befestigungsbereich 19 bezüglich dem oberen Befestigungsbereich 18 zurückversetzt angeordnet. Mit anderen Worten ist der untere Befestigungsbereich 19 näher am Lastfahrzeugheckbereich 2 angeordnet als der obere Befestigungsbereich. Mit wiederum anderen Worten ist der untere Befestigungsbereich 19 von dem oberen Befestigungsbereich 18 horizontal beabstandet angeordnet. Ein Abstand 38 zwischen dem unteren Befestigungsbereich 19 und dem oberen Befestigungsbereich 18 ist so bemessen, dass beide Befestigungsbereiche 18 und 19 an einen stufenförmigen Absatz des Lastfahrzeugheckbereichs 2 angebracht werden können. Der Abstand 38 kann somit variable auf spezielle geometrische Besonderheiten des Lastfahrzeugheckbereichs 2 angepasst werden.

Der Abstand 38 zwischen dem unteren Befestigungsbereich 19 und dem oberen Befestigungsbereich 18 wird dadurch erzielt, dass die Unterseite 16 einen im Wesentlichen horizontalen Fortsatz 40 aufweist, der über eine Kantung 42 in den unteren Befestigungsbereich 19 übergeht. Wie ebenfalls in Fig. 3 gezeigt, geht der obere Befestigungsbereich 18 über eine weitere Kantung 44 in die Oberseite 14 über.

Wie ferner in Fig. 3 gezeigt, begrenzen die Oberseite 14 und die Unterseite 16 einen zur Befestigungsseite bzw. dem Lastfahrzeugheckbereich 2 hin offenen Hohlraum 51. Der Hohlraum 51 wirkt als Knautschzone zum Aufnehmen von Stoßkräften, indem sich die Oberseite 14 und die Unterseite 16 beim Anschlagen des Rammschutzes 10 an eine Laderampe oder dergleichen verformen können. Diese Verformung kann plastisch oder elastisch sein. Die gemeinsame Kante 34 der Oberseite 14 und der Unterseite 16 weist ferner eine Rundung R auf, die in Abhängigkeit von dem Winkel α in einem Bereich von ungefähr 2 mm bis 15 mm oder auch bis 30 mm liegen kann. Die Rundung R bildet eine Anschlagfläche aus, an die die Laderampe oder dergleichen anschlagen kann. Aufgrund der konvexen Form der Kante 34 wird eine auf den Rammschutz 10 einwirkende Stoßkraft gleichmäßig auf die Oberseite 14 und die Unterseite 16 übertragen, wodurch die Stoßkräfte gleichmäßig auf den oberen Befestigungsbereich 18 und den unteren Befestigungsbereich 19 übergeleitet und von dort in den Rahmenbereich des Lastfahrzeugheckbereichs 2 eingeleitet werden. Da zudem die gemeinsame Kante 34 die einzige Anschlagfläche des Rammschutzes 10 bildet und sich diese einzelne Kante 34 bis auf die Aufnahmebereiche 30 über die gesamte Länge des Rammschutzes 10 erstreckt, wird die Torsionssteifigkeit des Rammschutzes 10 erhöht, wodurch die Kraftein- und überleitung optimiert wird.

Fig. 4 zeigt eine Seitenansicht eines beispielhaften Lagerelements 32. Das Lagerelement 32 hat eine im Wesentlichen trapezförmige Form mit einer langen Seite (lange Basisseite) 46 und einer der langen Seite 46 gegenüberliegenden kurzen Seite (kurze Basisseite) 48, sowie zwei sich zwischen der langen Seite 46 und der kurzen Seite 48 erstreckende Schenkel 50. Die Form des Lagerelementes 32 ist so bemessen, dass das Lagerelement 32 in den durch die Oberseite 14 und die Unterseite 16 zumindest teilweise begrenzenden Hohlraum 51 (siehe Fig. 3) eingeschoben werden kann und mit der Oberseite 14 und der Unterseite 16 über ihre beiden Schenkel 50 verbunden werden kann. Ein Verbinden der Lagerelemente 32 mit der Oberseite 14 und Unterseite 16 kann beispielsweise durch Verzinken oder ein anderes Fügeverfahren wie Schweißen oder dergleichen erfolgen.

Da einer der beiden Schenkel 50 mit der Oberseite 14 verbunden ist und der andere der beiden Schenkel 50 mit der Unterseite 16 verbunden ist, kann der eine Schenkel 50 allgemein auch als eine obere Seite 53 des Lagerelementes 32 und der andere Schenkel 50 allgemein auch als eine untere Seite 55 des Lagerelementes 32 bezeichnet werden.

Wie in Fig. 4 gezeigt, weist die kurze Seite 48 ferner eine bogenförmige Aussparung 52 auf. Ein Radius der bogenförmigen Aussparung 52 kann dabei so bemessen sein, dass dieser ungefähr der Rundung R der Kante 34 entspricht. Die bogenförmige Aussparung 52 dient dazu, dass das zum Befestigen der Lagerelemente 32 am Profilkörper 12 verwendete Zink während der Fertigung des Rammschutzes 10 ablaufen kann.

Wie ferner in Fig. 4 gezeigt, weist einer der Schenkel 50 eine Nase 54 auf. Die Nase 54 ist beispielhaft in Form eines Rechtecks gezeigt. Selbstverständlich kann die Nase 54 auch eine beliebige andere Form aufweisen. Die Nase 54 ist zum Eingreifen in eine an der Oberseite 14 entsprechend geformte Aussparung 56 ausgebildet. Durch das Zusammenwirken von Nase 54 und Aussparung 56 wird ein Formschluss des Lagerelementes 32 mit der Oberseite 14 erzeugt. Dieser Formschluss verbessert die Stabilität zwischen dem Lagerelement 32 und dem Profilkörper 12. Selbstverständlich kann die Nase 54 auch an der unteren Seite 55 angebracht sein, wobei die Nase 54 dann in eine entsprechende Aussparung 56 an der Unterseite 16 des Profilkörpers eingreift, wie in Fig. 5 beispielhaft gezeigt ist. Es können auch mehrere Nasen 54 auf der oberen Seite 53 und/oder der unteren Seite 55 ausgebildet sein, die in entsprechende Aussparungen in der Ober- und/oder Unterseite 14, 16 eingreifen.

Das Lagerelement 32 weist ferner eine sich durch das Lagerelement erstreckende Bohrung 58 auf. Die Bohrung 58 ist zum Aufnehmen eines Sicherungs- oder Haltebolzens für einen Rollrammpuffer ausgebildet und ermöglicht ein verschiebliches Lagern der Sicherungs- oder Haltebolzen, wie näher in Fig. 6 bis 9 gezeigt wird.

Das Lagerelement 32 kann aus einem metallischen Werkstoff wie beispielsweise Stahl hergestellt sein und kann eine Dicke in einem Bereich von ungefähr 2 mm bis 10 mm aufweisen.

Fig. 5 zeigt eine Abwicklung des in den Fig. 2 und 3 gezeigten Rammschutzes 10. Mit anderen Worten zeigt Fig. 5 einen Zustand eines unverformten Blechteils, aus dem der Profilkörper 12 gefertigt wird. Der Profilkörper 12 ist ein durch Umformen (Biegen) hergestelltes einteiliges Blechteil. Das Blechteil kann ebenfalls aus einem metallischen Werkstoff wie beispielsweise Stahl mit einer Dicke in einem Bereich von ungefähr 2 mm bis 10 mm hergestellt sein. Das Fertigen des Profilkörpers 12 erfolgt durch ein Biegen des Blechteils entlang der in Fig. 5 gezeigten Biegelinien 60.

Wie in Fig. 5 deutlich zu erkennen ist, weist der Aufnahmebereich 30 im unverformten Blechteil eine im Wesentlichen rechteckige Form auf und kann in dem Blechteil beispielsweise durch Stanzen oder Schneiden hergestellt werden. Wie ebenfalls in Fig. 5 zu erkennen ist, weist der untere Befestigungsbereich 19 ebenso wie der obere Befestigungsbereich 18 mehrere Bohrungen 24 auf, durch die Haftmittel, beispielsweise Schrauben, zum Befestigen des unteren Befestigungsbereichs 19 und des oberen Befestigungsbereichs 18 am Lastfahrzeugheckbereich 2 geführt werden können.

Wie in der Detailansicht von Fig. 5 gut zu erkennen ist, weist die Unterseite 16 ferner mehrere Bohrungen 62 auf, die unterhalb der erwähnten Aussparungen 29 angeordnet sind. Die Aussparungen 29 und die Bohrungen 62 dienen zum Durchführen einer Zollschnur zur zollamtlichen Versiegelung des Laderaums.

Wie zudem in der Detailansicht von Fig. 5 zu erkennen ist, weist der untere Befestigungsbereich 19 die erwähnten Aussparungen 56 auf, die mit den Nasen 54 der Lagerelemente 32 zusammenwirken. Ferner weist der untere Befestigungsbereich 19 mehrere rechteckförmige Einstecköffnungen 63 auf, die zum Einstecken der Lagerelemente 32 im Profilkörper 12 während der Herstellung des Rammschutzes 10 dienen.

Wie ebenfalls in der Detailansicht von Fig. 5 zu erkennen ist, weist die Unterseite 16 ein Langloch 64 auf. Das Langloch 64 weist einen ersten geraden Bereich 66 auf, der benachbart zum Aufnahmebereich 30 angeordnet ist. Das Langloch 64 weist ferner einen zweiten geraden Bereich 68 auf, der entfernt von dem Aufnahmebereich 30 angeordnet ist. Das Langloch 64 weist ferner einen zwischen dem ersten geraden Bereich 66 und dem zweiten geraden Bereich 68 angeordneten Vorsprung 70 auf. Der Vorsprung 70 ragt in das Langloch hinein. Wie in der Detailansicht von Fig. 5 gezeigt, weist der Vorsprung 70 eine im Wesentlichen bogenförmige Form auf. In dem Bereich zwischen dem ersten geraden Bereich 66 und dem zweiten geraden Bereich 68 weist das Langloch 64 ebenfalls einen bogenförmigen Bereich 72 auf. Der bogenförmige Bereich 72 ist derart ausgebildet, dass eine Breite B des Langlochs 64 über die gesamte Länge des Langlochs 64, das heißt vom ersten geraden Bereich 66 bis zum zweiten geraden Bereich 68, im Wesentlichen gleich ist. Der Vorsprung 70 weist ferner eine Bohrung 74 auf zum Einhaken einer Kette, eines Verzurrgurtes oder eines anderen Sicherungsmittels. An der Biegekante zwischen der Oberseite 14 und der Unterseite 16 befindet sich auf Höhe des Vorsprungs 70 bzw. des bogenförmigen Bereichs 72 ein Entlastungsschnitt 76. Der Entlastungsschnitt 76 und die Bohrung 74 dienen ferner dazu, eine Verformung des Profilkörpers 12 während der Herstellung des Profilkörpers 12 zu vermeiden, indem die in dem Blechteil vorhandenen Spannungsspitzen bei der Fertigung verringert bzw. vermieden werden.

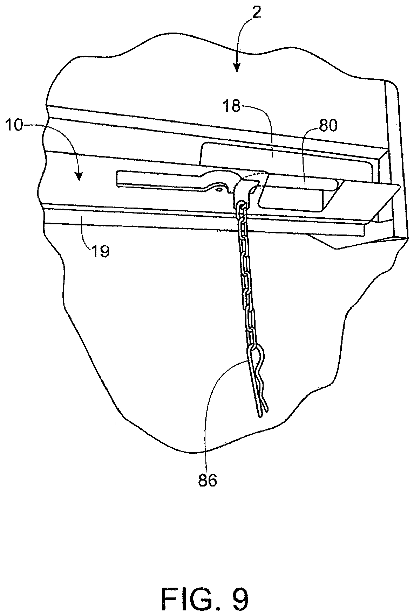

In den Fig. 6 bis 9 ist nun eine Teilansicht des Rammschutzes 10 gezeigt, bei der ein Rollrammpuffer 78 (siehe Fig. 6) mittels eines Sicherungsbolzens 80 (siehe Fig. 9) in den Rammschutz 10 bzw. dessen Profilkörper 12 integriert ist. In der in Fig. 6 gezeigten Ansicht ist der Rollrammpuffer 78 über einen Sicherungsbolzen 80 im Aufnahmebereich 30 integriert. Selbstverständlich kann der Rollrammpuffer 78 auch über einen anders geformten Haltebolzen in dem Aufnahmebreich 30 integriert sein. Beispielsweise kann der Rollrammpuffer 78 mit einem geraden Haltebolzen in dem Aufnahmebereich 30 integriert sein. Der gerade Haltebolzen weist seitliche Durchgangsbohrungen auf, durch die sich Hohlspannstifte erstrecken zur längsverschieblichen Fixierung des Haltebolzens in den Lagerelementen 32.

Der Rollrammpuffer 78 kann aus einem elastisch verformbaren Material hergestellt sein, sodass bei einem Anschlagen des Lastfahrzeugheckbereichs 2 die auftretenden Stoßkräfte zumindest teilweise in elastische Verformungsenergie umgewandelt werden.

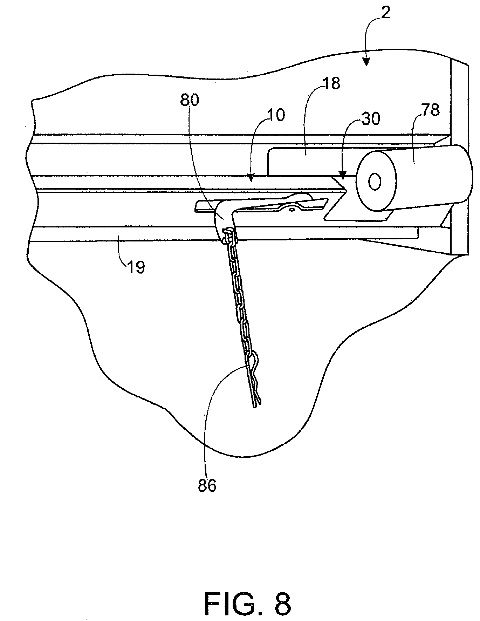

Der Rollrammpuffer 78 weist ferner eine im Wesentlichen zylindrische Form mit einer zentralen Bohrung auf, durch die sich der Sicherungsbolzen 80 erstreckt. Der Sicherungsbolzen 80 weist einen geraden Abschnitt 82 auf, der sich durch den Rollrammpuffer 78 und die Bohrung 58 der Lagerelemente 32 erstreckt. Der Sicherungsbolzen 80 weist ferner ein bogenförmiges Griffende 84 auf, das sich an den geraden Abschnitt 82 anschließt und zumindest teilweise durch das Langloch 64 hindurchtritt. Das bogenförmige Griffende 84 ist zum Bewegen des Sicherungsbolzens 80 von einer geschlossenen Stellung (siehe Fig. 6), in der der gerade Abschnitt 82 in beiden Lagerelementen 32 geführt ist, in eine offene Stellung (siehe Fig. 8), in der der gerade Abschnitt 82 nur in einem der Lagerelemente 32 geführt ist, ausgebildet. Das bogenförmige Griffende 84 weist ferner einen Federstecker 86 auf, der den Sicherungsbolzen 80 in der geschlossenen Stellung sichert. In der in Fig. 6 gezeigten geschlossenen Stellung des Sicherungsbolzens 80 umschließt der Federstecker 86 den geraden Abschnitt 82 und verhindert somit eine Längsverschieblichkeit des Sicherungsbolzens 80 in den Lagerelementen 32. Ferner dient der Vorsprung 70 als Anschlag für das bogenförmige Griffende 84 in der geschlossenen Stellung des Sicherungsbolzens 80. Der Vorsprung 70 verhindert, dass sich der Federstecker 86 nicht unbeabsichtigt löst, da der Sicherungsbolzen 80 mit seinem Griffende 84 am Vorsprung 70 anliegt. Der Vorsprung 70 stellt ferner sicher, dass sich der Sicherungsbolzen 80 nicht unbeabsichtigt aus der geschlossenen Stellung in die offene Stellung bewegt, wenn der Federstecker 86 entfernt ist, da das Gewicht des Griffendes 84 dazu führt, dass das Griffende 84 am Vorsprung 70 anliegt.

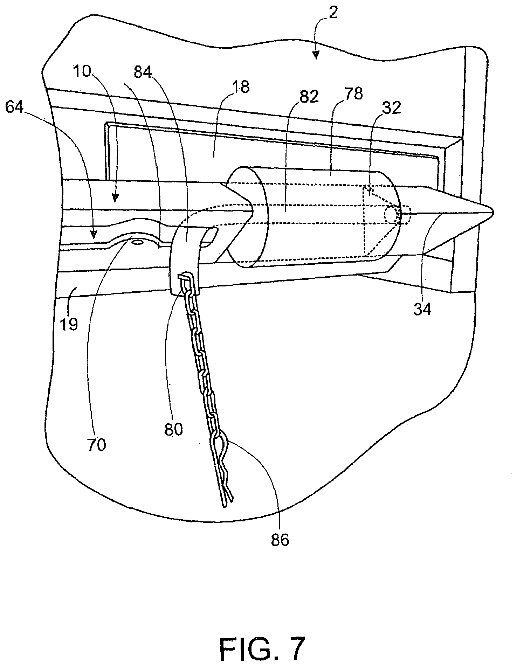

Fig. 7 zeigt eine Teilansicht des Rammschutzes 10, bei der der Federstecker 86 von dem geraden Abschnitt 82 des Sicherungsbolzens 80 gelöst ist. Sobald der Federstecker 86 vom Sicherungsbolzen 80 gelöst ist, kann das bogenförmige Griffende 84 durch eine Drehbewegung entgegen der Richtung der Gewichtskraft des Griffendes 84 über den Vorsprung 70 bewegt werden. Sobald das Griffende 84 gedreht wurde, kann der Sicherungsbolzen 80 von der geschlossenen Stellung in die offene Stellung bewegt werden. Der Vorsprung 70 dient zusammen mit dem Federstecker 86 also als eine zweistufige Lösesicherung für den Sicherungsbolzen 80.

Sobald, wie in Fig. 8 gezeigt, der Sicherungsbolzen 80 in die offene Stellung bewegt wurde, kann der Rollrammpuffer 78 von dem geraden Abschnitt 82 des Sicherungsbolzens 80 abgezogen werden und aus dem Aufnahmebereich 30 entfernt werden. Das Langloch 64 zusammen mit dem Sicherungsbolzen 80 und dem in dem Profilkörper 12 integrierten Aufnahmebereich 30 ermöglichen somit ein sicheres und komfortables Wechseln des Rollrammpuffers 78. Im Falle des erwähnten geraden Haltebolzens, der mittels Hohlspannstifte in den Lagerelementen 32 befestigt ist, kann ein Wechseln des Rollrammpuffers 78 beim Montieren/Demontieren des Rammschutzes 10 oder bei Wartungsarbeiten am Rammschutz 10 erfolgen.

Wie ferner in Fig. 9 gezeigt, kann der Sicherungsbolzen 80 auch ohne den Rollrammpuffer 78 verwendet werden. Beispielsweise kann der Sicherungsbolzen 80 in der geschlossenen Stellung im Aufnahmebereich 30 positioniert sein. Der Sicherungsbolzen 80 schafft in der geschlossenen Stellung eine Befestigungsmöglichkeit für eine Sicherungskette (siehe Fig. 10) eines am Fahrzeugheckbereich 2 mitgeführten Mitnahme-Gabelstaplers (nicht gezeigt). Es ist jedoch auch möglich, dass der Sicherungsbolzen 80 in der geschlossenen Stellung zum Verzurren eines Verzurrgurtes verwendet werden kann.

Der Rammschutz 10 gemäß der vorliegenden Offenbarung kombiniert somit eine Knautschzone zum Einleiten von Stoßkräften mit einem Rollrammpuffer 78 als elastisch verformbaren Pufferkörper. Zusätzlich schafft der Rammschutz 10 gemäß der vorliegenden Offenbarung eine Befestigungsmöglichkeit für einen am Fahrzeugheckbereich 2 mitgeführten Ladungsträger, indem der Rollrammpuffer 78 mittels eines Sicherungsbolzens 80 im Aufnahmebereich 30 befestigt ist und einfach vom Sicherungsbolzen 80 abgezogen werden kann. Der Sicherungsbolzen 80 erfüllt somit eine Doppelfunktion: Erstens dient er der Befestigung des Rollrammpuffers 78 im Aufnahmebereich 30. Und zweitens schafft er eine Befestigungsmöglichkeit für einen mitgeführten Ladungsträger, wenn der Rollrammpuffer 78 abgezogen ist.

Obwohl in den Zeichnungen der Rollrammpuffer 78 in Zusammenhang mit einem Sicherungsbolzen 80 mit einem bogenförmigen Griffende 84 gezeigt ist, ist es wie erwähnt selbstverständlich auch möglich, dass der Rollrammpuffer 78 mit einem geraden Haltebolzen in den Lagerelementen 32 fixiert ist. Im Falle eines geraden Haltebolzens können Hohlspannstifte, die sich durch seitliche Enden des Haltebolzens erstrecken, zur Lagesicherung des Haltebolzens in den Lagerelementen 32 verwendet werden.

Obwohl in den Figuren der Profilkörper 12 mit einem im Wesentlichen V-förmigen Querschnittsprofil gezeigt ist, ist es selbstverständlich auch möglich, dass der Profilkörper ein anderes Querschnittsprofil aufweist. So kann der Profilkörper 12 beispielsweise ein im Wesentlichen U-förmiges Querschnittsprofil aufweisen, bei dem die Knautschzone zwischen einer Oberseite und einer Unterseite des U-förmigen Querschnittsprofils ausgebildet ist.

Obwohl in den Figuren zwei seitliche Aufnahmebereiche 30 gezeigt sind, ist es selbstverständlich auch möglich, dass der Rammschutz 10 nur einen Aufnahmebereich 30 aufweist oder mehr als zwei Aufnahmebereiche 30 aufweist. Die Aufnahmebereiche können ferner an anderen als den in den Figuren gezeigten Position angeordnet sein. Beispielsweise kann ein Aufnahmebereich mittig am Profilkörper 12 angeordnet sein.

Obwohl diese Offenbarung in Zusammenhang mit bevorzugten Ausführungsformen beschrieben ist, können Verbesserungen und/oder Modifikationen an den Ausführungsformen vorgenommen werden, ohne vom Schutzbereich der nun folgenden Ansprüche abzuweichen.

## Patentansprüche

1. Rammschutz (10) für einen Nutzfahrzeug- bzw. Lastfahrzeugheckbereich (2), mit:
- einem länglichen Profilkörper (12), der eine Befestigungsseite zum Befestigen des Rammschutzes (10) an dem Lastfahrzeugheckbereich (2) und eine der Befestigungsseite gegenüberliegende Anschlagseite aufweist, wobei die Anschlagseite eine Knautschzone zum Aufnehmen von Stoßkräften aufweist und die Knautschzone einen zum Lastfahrzeugheckbereich (2) hin offenen Hohlraum (51) aufweist, der zumindest teilweise durch eine Oberseite (14) und eine Unterseite (16) des Profilkörpers (12) begrenzt ist und der Hohlraum (51) dazu ausgebildet ist, durch eine Verformung der Oberseite (14) und/oder der Unterseite (16) Stoßkräfte beim Anschlagen des Rammschutzes (10) aufzunehmen, und
- mindestens einem als Ausnehmung in den Profilkörper (12) integrierten Aufnahmebereich (30), der dazu ausgebildet ist, einen Rollrammpuffer (78) zu befestigen und eine Befestigungsmöglichkeit für einen an dem Lastfahrzeugheckbereich (2) mitgeführten Ladungsträger zu schaffen, wobei benachbart zu jeder Ausnehmung zwei in dem Hohlraum (51) angeordnete Lagerelemente (32) vorhanden sind, die mit der Oberseite (14) und der Unterseite (16) verbunden sind und jeweils eine Bohrung (58) zum Lagern eines Sicherungsbolzens (80) oder eines Haltebolzens für den Rollrammpuffer (78) aufweisen.

2. Rammschutz (10) nach Anspruch 1, wobei das Lagerelement (32) an einer oberen Seite (53) und/oder einer unteren Seite (55) eine Nase (54) aufweist, die dazu ausgebildet ist, in eine in der Oberseite (14) und/oder in der Unterseite (16) ausgebildete Aussparung (56) formschlüssig einzugreifen.

3. Rammschutz (10) nach Anspruch 1 oder 2, wobei das Lagerelement (32) an einer der Anschlagseite zugewandten Seite (48) eine bogenförmige Aussparung (52) umfasst.

4. Rammschutz (10) nach einem der Ansprüche 1 bis 3, wobei der Rollrammpuffer (78) eine im Wesentlichen zylindrische Form mit einer zentralen Bohrung aufweist und sich der Sicherungsbolzen (80) oder der Haltebolzen durch die Bohrung des Rollrammpuffers (78) und die Bohrung der Lagerelemente (32) derart erstreckt, dass der Rollrammpuffer (78) in dem Aufnahmebereich (30) drehbar gelagert ist.

5. Rammschutz (10) nach einem der Ansprüche 1 bis 4, wobei:
der Rammschutz (10) an der Unterseite (16) des Profilkörpers (12) ein Langloch (64) aufweist, das benachbart zur Ausnehmung angeordnet ist,
der Sicherungsbolzen (80) einen geraden Abschnitt (82) und ein an den geraden Abschnitt (82) anschließendes bogenförmiges Griffende (84) aufweist,
der gerade Abschnitt (82) in der Bohrung (58) der Lagerelemente (32) verschieblich gelagert ist und
das bogenförmige Griffende (84) zumindest teilweise durch das Langloch (64) hindurchtritt zum Bewegen des Sicherungsbolzens (80) zwischen einer geschlossenen Stellung und einer offenen Stellung.

6. Rammschutz (10) nach Anspruch 5, wobei das Langloch (64) einen in das Langloch (64) hineinragenden Vorsprung (70) aufweist, der in der geschlossenen Stellung des Sicherungsbolzens (80) als Anschlag für das bogenförmige Griffende (84) dient.

7. Rammschutz (10) nach einem der Ansprüche 1 bis 6, wobei der Profilkörper (12) an einer Oberseite (14) des Profilkörpers (12) einen oberen Befestigungsbereich (18) und an einer Unterseite (16) des Profilkörpers (12) einen unteren Befestigungsbereich (19) aufweist und der obere Befestigungsbereich (18) und der untere Befestigungsbereich (19) jeweils zum Befestigen des Rammschutzes (10) an dem Lastfahrzeugheckbereich (2) ausgebildet sind.

8. Rammschutz (10) nach Anspruch 7, wobei der untere Befestigungsbereich (19) näher am Lastfahrzeugheckbereich (2) angeordnet ist als der obere Befestigungsbereich (18).

9. Rammschutz (10) nach Anspruch 7 oder 8, wobei der obere Befestigungsbereich (18) von der Längserstreckungsrichtung des Profilkörpers (12) aus betrachtet eine mittige Befestigungslasche (20) und zwei seitliche Befestigungslaschen (22) aufweist und/oder
der untere Befestigungsbereich (19) als durchgehende Befestigungslasche ausgebildet ist, die sich über die gesamte Länge des Profilkörpers (12) erstreckt.

10. Rammschutz (10) nach einem der Ansprüche 1 bis 9, wobei:
eine Oberseite (14) und eine Unterseite (16) des Profilkörpers (12) zueinander V-förmig angeordnet sind,
die Oberseite (14) und die Unterseite (16) an der Anschlagseite des Rammschutzes (10) an einer gemeinsamen Kante (34) miteinander verbunden sind und
die Kante (34) eine Rundung (R) aufweist, die als Anschlagfläche für den Rammschutz (10) ausgebildet ist.

11. Rammschutz (10) nach einem der Ansprüche 1 bis 10, wobei der längliche Profilkörper (12) zwei seitliche, voneinander beabstandete Enden (28) aufweist, deren Abstand (36) derart bemessen ist, dass sich der Rammschutz (10) nahezu über die gesamte Breite (3) des Lastfahrzeugheckbereichs (2) erstreckt, und/oder
der Profilkörper (12) als ein einteilig umgeformtes Blechteil ausgebildet ist, und/oder
der mindestens eine Aufnahmebereich (30) zwei Aufnahmebereiche (30) sind, die an entgegengesetzten Endbereichen (26) des Profilkörpers (12) angeordnet sind.

12. Rammschutz (10) nach einem der Ansprüche 1 bis 11, wobei eine Oberseite (14) des Rammschutzes (10) mehrere Aussparungen (29) aufweist und eine Unterseite (16) des Rammschutzes (10) mehrere unterhalb der Aussparungen (29) angeordnete Bohrungen (62) aufweist, wobei die Aussparungen (29) und die Bohrungen (62) zum Durchführen einer Zollschnur ausgebildet sind,

13. Lastfahrzeug, insbesondere Lastkraftwagen oder Sattelauflieger, mit:
- einem Lastfahrzeugheckbereich (2), der zum Anbringen eines Rammschutzes (10) ausgebildet ist, und
- einem am Lastfahrzeugheckbereich (2) angebrachten Rammschutz (10) nach einem der voranstehenden Ansprüche.

## Claims

1. A ram protection (10) for a rear portion (2) of a commercial vehicle or heavy-duty vehicle, comprising
- an elongate profile body (12) with a mounting side for mounting the ram protection (10) to the rear portion (2) of the heavy-duty vehicle, and an impact side opposed to the mounting side, wherein the impact side is provided with a crumple zone for absorbing impact forces, and the crumple zone is provided with a hollow space (51) that opens towards the rear portion (2) of the heavy-duty vehicle and is at least partially defined by an upper side (14) and a lower side (16) of the profile body (12), and wherein the hollow space (51) is adapted to absorb impact forces impacting on the ram protection (10) by deformation of the upper side (14) and/or the lower side (16), and
- at least one receiving portion (30) integrated in the profile body (30) in the form of a recess, and adapted to mount a roller bumper (78) and to provide a mounting option for a cargo carrier pulled along at the rear portion (2) of the heavy-duty vehicle, wherein, adjacent to each recess, two supporting elements (32), are provided arranged in the hollow space (51), which supporting elements are connected to the upper side (14) and the lower side (16) and respectively comprise a bore (58) for supporting a securing pin (80) or a retaining pin for the roller bumper (78).

2. The ram protection (10) according to claim 1, wherein the supporting element (32) is provided with a nose (54) that is adapted to positively interfere with a recess (56) formed in the upper side (14) and/or the lower side (16).

3. The ram protection (10) according to claim 1 or 2, wherein the supporting element (32) comprises an arc-shaped recess (52) on a side (48) facing the impact side.

4. The ram protection (10) according to any one of claims 1 to 3, wherein the roller bumper (78) has a substantially cylindrical shape with a central bore, and wherein the securing pin (80) or the retaining pin extends through the bore of the roller bumper (78) and the bore of the supporting elements (32) such that the roller bumper (78) is rotatably supported in the receiving portion (30).

5. The ram protection (10) according to any one of claims 1 to 4, wherein
the ram protection (10) is provided with an elongated hole (64) at the lower side (16) of the profile body (12), which elongated hole is provided adjacent to the recess,
the securing pin (80) comprises a straight section (82) and an arc-shaped handle end (84) attached to the straight section (82),
the straight section (82) is slidably supported in the bore (58) of the supporting elements (32), and
the arc-shaped handle end (84) at least partially passes through the elongated hole (64) for moving the securing pin (80) between a locked position and an unlocked position.

6. The ram protection (10) according to claim 5, wherein the elongate hole (64) is provided with a protrusion (70), which protrudes into the elongated hole (64) and, in the locked position of the securing pin (80), serves as a stopper for the arc-shaped handle end (84).

7. The ram protection (10) according to any one of claims 1 to 6, wherein the profile body (12) is provided with an upper mounting portion (18) at an upper side (14) of the profile body (12), and a lower mounting portion (19) at a lower side (16) of the profile body (12), and wherein the upper mounting portion (18) and the lower mounting portion (19), respectively, are adapted for mounting the ram protection (10) to the rear portion (2) of the heavy-duty vehicle.

8. The ram protection (10) according to claim 7, wherein the lower mounting portion (19) is arranged closer to the rear portion (2) of the heavy-duty vehicle than the upper mounting portion (18).

9. The ram protection (10) according to claim 7 or 8, wherein the upper mounting portion (18) is provided with a central mounting lug (20) and two lateral mounting lugs (22) when viewed in the longitudinal direction of the profile body (12), and/or
wherein the lower mounting portion (19) is formed as a continuous mounting lug extending over the entire length of the profile body (12).

10. The ram protection (10) according to any one of claims 1 to 9, wherein
an upper side (14) and a lower side (16) of the profile body (12) are arranged in a V-shape,
the upper side (14) and the lower side (16) are connected to each other at a common edge (34) on the impact side of the ram protection (10), and
the edge (34) is provided with a rounding (R) serving as an impact surface for the ram protection (10).

11. The ram protection (10) according to any one of claims 1 to 10, wherein the elongate profile body (12) comprises two lateral ends (28) that are spaced from each other, the spacing (36) being such that the ram protection (10) substantially extends over the entire width (3) of the rear portion (2) of the heavy-duty vehicle, and/or
the profile body (12) is formed as a one-piece reshaped sheet metal part, and/or
the at least one receiving portion (30) comprises two receiving portions (30) arranged at opposing end portions (26) of the profile body (12).

12. The ram protection (10) according to any one of claims 1 to 11, wherein an upper side (14) of the ram protection (10) is provided with a plurality of recesses (29), and a lower side (16) of the ram protection (10) is provided with a plurality of bores (62) arranged below the recesses (29), the recesses (29) and the bores (62) being adapted for passing a customs cable therethrough.

13. A heavy-duty vehicle, in particular truck or semitrailer, comprising
- a heavy-duty vehicle rear portion (2) adapted for mounting a ram protection (10), and
- a ram protection (10) according to any one of the preceding claims, which is mounted to the heavy-duty vehicle rear portion (2).

## Revendications

1. Pare-chocs (10) destiné à un secteur arrière (2) de véhicule utilitaire ou de camion, avec :
- un corps profilé allongé (12) présentant un côté fixation destiné à la fixation du pare-chocs (10) au niveau du secteur arrière de camion (2) et un côté butoir opposé au côté fixation, dans lequel le côté butoir présente une zone de déformation destinée à l'absorption de forces d'impact et la zone de déformation présente une cavité (51) ouverte vers le secteur arrière de camion (2) et délimitée au moins partiellement par un côté supérieur (14) et par un côté inférieur (16) du corps profilé (12), et la cavité (51) est conçue pour absorber des forces d'impact survenant lorsque le pare-chocs (10) est heurté grâce à une déformation du côté supérieur (14) et/ou du côté inférieur (16), et
- au moins une zone d'absorption (30) intégrée sous forme d'évidement dans le corps profilé (12) et conçue pour fixer un butoir à rouleau (78) et pour offrir une possibilité de fixation pour un porte-charge transporté au niveau du secteur arrière de camion (2), dans lequel deux éléments de support (32) agencés dans la cavité (51) sont présents au voisinage de chaque évidement, lesdits éléments de support étant reliés au côté supérieur (14) et au côté inférieur (16) et présentant respectivement un alésage (58) destiné à l'installation d'une goupille de verrouillage (80) ou d'une goupille de retenue pour le butoir à rouleau (78).

2. Pare-chocs (10) selon la revendication 1, dans lequel l'élément de support (32) présente sur un côté supérieur (53) et/ou un côté inférieur (55) un ergot (54) conçu pour venir en prise par complémentarité de forme avec une encoche (56) réalisée dans le côté supérieur (14) et/ou dans le côté inférieur (16).

3. Pare-chocs (10) selon la revendication 1 ou 2, dans lequel l'élément de support (32) comprend une encoche arquée (52) située au niveau d'un côté (48) tourné vers le côté butoir.

4. Pare-chocs (10) selon l'une quelconque des revendications 1 à 3, dans lequel le butoir à rouleau (78) présente une forme essentiellement cylindrique avec un alésage central, et la goupille de verrouillage (80) ou la goupille de retenue s'étend à travers l'alésage du butoir à rouleau (78) et l'alésage des éléments de
support (32) de telle manière que le butoir à rouleau (78) est installé rotatif dans la zone d'absorption (30).

5. Pare-chocs (10) selon l'une quelconque des revendications 1 à 4, dans lequel :
le pare-chocs (10) présente au niveau du côté inférieur (16) du corps profilé (12) un trou allongé (64) agencé au voisinage de l'évidement,
la goupille de verrouillage (80) présente une section droite (82) et une extrémité de saisie arquée (84) faisant suite à la section droite (82),
la section droite (82) est installée coulissante dans l'alésage (58) des éléments de support (32) et
l'extrémité de saisie arquée (84) traverse au moins partiellement le trou allongé (64) afin de déplacer la goupille de verrouillage (80) entre une position fermée et une position ouverte.

6. Pare-chocs (10) selon la revendication 5, dans lequel le trou allongé (64) présente une avancée (70) faisant saillie dans le trou allongé (64) et faisant office de butoir pour l'extrémité de saisie arquée (84) dans la position fermée de la goupille de verrouillage (80)

7. Pare-chocs (10) selon l'une quelconque des revendications 1 à 6, dans lequel le corps profilé (12) présente, au niveau d'un côté supérieur (14) du corps profilé (12), un secteur de fixation supérieur (18) et, au niveau d'un côté inférieur (16) du corps profilé (12), un secteur de fixation inférieur (19), et le secteur de fixation supérieur (18) et le secteur de fixation inférieur (19) sont respectivement conçus pour fixer le pare-chocs (10) au secteur arrière de camion (2).

8. Pare-chocs (10) selon la revendication 7, dans lequel le secteur de fixation inférieur (19) est situé plus près du secteur arrière de camion (2) que ne l'est le secteur de fixation supérieur (18).

9. Pare-chocs (10) selon la revendication 7 ou 8, dans lequel le secteur de fixation supérieur (18) présente, vu dans le sens d'extension longitudinale du corps profilé (12), une patte de fixation centrale (20) et deux pattes de fixation latérales (22) et/ou
le secteur de fixation inférieur (19) est conçu pour faire office de patte de fixation continue s'étendant sur toute la longueur du corps profilé (12).

10. Pare-chocs (10) selon l'une quelconque des revendications 1 à 9, dans lequel :
un côté supérieur (14) et un côté inférieur (16) du corps profilé (12) sont agencés en forme de V l'un par rapport à l'autre,
le côté supérieur (14) et le côté inférieur (16) sont reliés entre eux par un bord commun (34) au niveau du côté butoir du pare-chocs (10) et
le bord (34) présente un galbe (R) conçu pour faire office de surface de butoir pour le pare-chocs (10).

11. Pare-chocs (10) selon l'une quelconque des revendications 1 à 10, dans lequel le corps profilé allongé (12) présente deux extrémités latérales (28) espacées l'une de l'autre et dont l'espacement (36) est dimensionné de manière à ce que le pare-chocs (10) s'étende à peu près sur toute la largeur (3) du secteur arrière de camion (2), et/ou
le corps profilé (12) est conçu sous la forme d'une tôle formée d'un seul tenant, et/ou
la au moins une zone d'absorption (30) représente deux zones d'absorption (30) qui sont agencées au niveau de secteurs d'extrémité (26) opposés du corps profilé (12).

12. Pare-chocs (10) selon l'une quelconque des revendications 1 à 11, dans lequel un côté supérieur (14) du pare-chocs (10) présente plusieurs encoches (29) et un côté inférieur (16) du pare-chocs (10) présente plusieurs alésages (62) agencés en dessous des encoches (29), dans lequel les encoches (29) et les alésages (62) sont conçus pour la mise en oeuvre d'un scellement douanier.

13. Camion, en particulier poids-lourd ou semi-remorque, avec :
- un secteur arrière de camion (2) conçu pour l'ajout d'un pare-chocs (10), et
- un pare-chocs (10) selon l'une quelconque des revendications précédentes ajouté au secteur arrière de camion (2).
